# EUROPÄISCHE PATENTSCHRIFT

(11) **EP 3 543 675 B1**
(45) Veröffentlichungstag und Bekanntmachung des Hinweises auf die Patenterteilung: **25.12.2024**
(21) Anmeldenummer: 19164540.7
(22) Anmeldetag: 22.03.2019
(51) Int. Cl.: G01M 99/00, A47C 31/12, B60N 2/24, B60N 2/34, G09B 23/32

(54) **TESTATTRAPPE FÜR EINEN SITZ UND VORRICHTUNG ZUM TESTEN EINES SITZES**
TEST DUMMY FOR A SEAT AND DEVICE FOR TESTING A SEAT
MODÈLE D'ESSAI POUR UN SIÈGE ET DISPOSITIF D'ESSAI D'UN SIÈGE

(30) Priorität: 23.03.2018 DE 202018101657 U
(43) Veröffentlichungstag der Anmeldung: 25.09.2019
(73) Patentinhaber: Adient Aerospace, LLC, Bothell, WA 98011 (US)
(72) Erfinder: SCHELP, Dr., Mirko, 67245 Lambsheim (DE); WICKE, Nico, 67659 Kaiserslautern (DE); FISCHER, Holger, 67659 Kaiserslautern (DE); WAIGEL, Udo, 67808 Bayerfeld-Steckweiler (DE); MANUEL, Lea, 67731 Otterbach (DE)
(74) Vertreter: Arnold & Siedsma

(56) Entgegenhaltungen:
- DE-A1- 102016 202 397
- GB-A- 986 093

## Beschreibung

Die Erfindung betrifft eine Testattrappe für einen Sitz, insbesondere Fahrzeugsitz oder Flugzeugsitz. Des Weiteren betrifft die Anmeldung eine Vorrichtung zum Testen des Sitzes.

Aus dem Stand der Technik sind als Testattrappen beispielsweise Crashtest-Dummys bekannt, um einen Sitz zu testen. Dabei werden mittels des Dummys die Auswirkungen eines Unfalls auf einen menschlichen Körper simuliert.

Zum Beispiel offenbart die GB 986,093 A eine Testattrappe für einen Fahrzeugsitz, die einen Rumpf und Beinteile aus hohlem Metall aufweist, die mit Schaumgummimaterial mit variierender Dicke bedeckt sind. An den Teilen sind Belastungszellen angeordnet, deren Beladung gemessen wird, um die vom Fahrzeugsitz auf die Testattrappe ausgeübte Druckverteilung zu bestimmen.

Die DE 10 2016 202 397 A1 offenbart einen Sitzhaltungsdummy, der ausgelegt ist, um zur Bewertung eines Sitzes verwendet zu werden. Der Dummy umfasst einen Beckenbereich, der ausgelegt ist, um auf einem Sitzkissen angeordnet zu werden; einen Brustbereich, der ausgelegt ist, um an einer einer Sitzlehne gegenüberliegenden Position angeordnet zu werden, wobei eine Relativposition zwischen dem Brustbereich und dem Beckenbereich geändert werden kann; eine Neigungseinstellungsvorrichtung, die ausgelegt ist, um eine Neigung des Brustbereichs zu ändern; und eine Verarbeitungsvorrichtung, die ausgelegt ist, um die Neigungseinstellungsvorrichtung unter Verwendung eines durch einen Detektor erfassten Ergebnisses zu steuern.

Des Weiteren sind aus dem Stand der Technik Sitze, insbesondere Flugzeugsitze, bekannt, die zwischen einer so genannten TTL-Position (taxi-take-off-and-landing position) und einer Liege- oder Bett-Position verstellbar sind.

Aufgabe der vorliegenden Erfindung ist es, eine verbesserte Testattrappe für einen insbesondere verstellbaren Sitz und eine Vorrichtung zum Testen eines insbesondere verstellbaren Sitzes mittels einer verbesserten Testattrappe anzugeben.

Die Aufgabe hinsichtlich der Testattrappe wird erfindungsgemäß gelöst durch die Merkmale des Anspruchs 1. Die Aufgabe hinsichtlich der Vorrichtung wird erfindungsgemäß gelöst durch die Merkmale des Anspruchs 14.

Weiterbildungen der Erfindung sind Gegenstand der abhängigen Ansprüche.

Die erfindungsgemäße Testattrappe umfasst zumindest drei miteinander gelenkig verbundene Testelemente, wobei ein erstes Testelement als ein Rückenelement, ein zweites Testelement als ein Gesäß-/Oberschenkelelement und ein drittes Testelement als ein Wadenelement ausgebildet sind, wobei das jeweilige Testelement eine Schalenstruktur aufweist, wobei jede Schalenstruktur eine Schalenöffnung aufweist, die ausgebildet ist, eine Tragstruktur lösbar aufzunehmen.

Die mit der Erfindung erzielten Vorteile bestehen darin, dass mittels der Testattrappe eine realistische, auf einen Sitz wirkende Last einer Person ermittelbar ist. Insbesondere sind auf einen Sitz wirkende Kräfte, wie Lastmengen und Lastverteilungen, über die Testelemente, die weitestgehend realistisch proportionierte Körperteile und/oder -regionen einer Person simulieren, ermittelbar. Die Testelemente sind durch ihre jeweilige Schalenstruktur und die darin angeordneten Tragstrukturen hinsichtlich eines Gewichts konfigurierbar. Mittels der Testattrappe ist also eine realistische Last, die auf einen Sitz, insbesondere während seiner Verstellung zwischen unterschiedlichen Positionen, aufgebracht wird, simulierbar. Darüber hinaus sind unterschiedliche Lastverteilungen auf unterschiedliche Sitzregionen überprüfbar. Zudem können kollisionsbedingte Lasteinwirkungen auf den Sitz bzw. auf unterschiedliche Sitzregionen durch die jeweiligen, körperteilähnlichen Testelemente geprüft werden. Zum Beispiel wird eine Belastbarkeit des Sitzes bzw. von Sitzregionen, wie Sitzpolster, Rückenlehne und/oder Beinstütze, in einem Dauertest über mehreren Zyklen mittels der auf dem Sitz positionierten Testattrappe getestet.

Eine mögliche Weiterbildung sieht vor, dass die jeweilige Schalenstruktur eine Schalenöffnung umfasst, in welcher die jeweilige Tragstruktur von außen zugänglich eingesetzt und gehalten ist. Beispielsweise umfasst das jeweilige Testelement eine halboffene Schalenstruktur. Beispielsweise ist die Schalenstruktur nach oben hin offen ausgebildet. Insbesondere ist die Schalenstruktur auf einer dem Sitz gegenüberliegenden Seite hin offen ausgebildet. Dadurch ist eine Anordnung der jeweiligen Tragstruktur in die zugehörige Schalenstruktur vereinfacht. Eine Unterseite der jeweiligen Schalenstruktur stellt dabei körperteilrealistische Zonen einer Person dar. Insbesondere ist die Unterseite der jeweiligen Schalenstruktur, die dem Sitz zugewandt ist, geformt, um hintere Körperregionen einer Person zu simulieren.

In einer weiteren Ausführungsform ist die jeweilige Schalenstruktur halbschalenförmig ausgebildet, wobei in die offene Seite die zugehörige Tragstruktur aufnehmbar ist. Beispielsweise ist die jeweilige Schalenstruktur in einfacher Weise herstellbar. Zum Beispiel sind die Testelemente mit ihren Schalenstrukturen Gussteile.

In einer möglichen Ausgestaltung sind die jeweiligen Testelemente aus Kunststoff, wie beispielsweise Gummi, oder Metall oder Holz gebildet.

In einer weiteren möglichen Ausgestaltung ist die jeweilige Unterseite der Testelemente mit einem Polsterelement versehen. Beispielsweise ist das jeweilige Polsterelement aus Kunststoff, wie Gummi, gebildet. Dadurch können weitestgehend realistische Körperteile und/oder -regionen einer Person, die auf einen Sitz wirken, simuliert werden.

Insbesondere ist die jeweilige Schalenstruktur geformt, um ein entsprechendes Körperteil zu simulieren. Die jeweilige Schalenstruktur kann aus unterschiedlichsten Materialien wie Kunststoff, Metall, Holz oder Mischungen aus genannten Materialien gebildet sein, wobei eine hinreichende Festigkeit und Formtreue sicherzustellen sind. Dabei weist die Schalenstruktur für das Rückenelement eine rückenähnliche Form auf und kann einteilig oder mehrteilig ausgebildet sein. Die rückenförmige Schalenstruktur ist im Wesentlichen flächig ausgebildet und weist eine leicht gebogene Kontur auf. Die Schalenstruktur für das Gesäßelement weist eine dem Gesäß und den Oberschenkel eines sitzenden Menschen ähnliche Form auf und ist insbesondere einteilig ausgebildet. Beispielsweise weist die gesäßförmige Schalenstruktur im Bereich des Gesäßes eine L-Form auf und im Bereich der Oberschenkel eine flächige V-Form auf. Die Schalenstruktur des Wadenelements kann einteilig oder mehrteilig ausgebildet sein, wobei je Wade eine wadenförmige Halbschale vorgesehen ist.

Gemäß einer Ausführungsform ist die jeweilige Tragstruktur ausgebildet, zumindest eine Gewichtseinheit aufzunehmen und zu halten. Darüber hinaus kann aufgrund der halboffenen Schalenstruktur mindestens eine oder mehrere der Tragstrukturen mit zusätzlichen Gewichtseinheiten versehen werden, um verschiedene Belastungsprofile des Sitzes und/oder -verteilungen am/im Sitz zu testen. Zum Beispiel stellen die Tragstrukturen veränderbare Module dar, um unterschiedliche Lastmengen und Lastverteilungen am Sitz überprüfen zu können.

In einer weiteren Ausführungsform ist zumindest eine der Tragstrukturen derart konfiguriert, dass diese in Länge und/oder Breite verstellbar sind bzw. ist. Beispielsweise ist die Tragstruktur des Wadenelements in der Länge verstellbar. Hierdurch können mittels einer solch variabel einstellbaren Testattrappe und somit mit ein- und derselben Attrappe verschiedene Körperabmessungen, wie Körperlängen und/oder -breiten, berücksichtigt und deren Auswirkungen beim Verstellen am Sitz getestet werden.

In einer möglichen Ausführungsform sind die Tragstruktur des Rückenelements und die Tragstruktur des Gesäßelements mittels eines ersten Gelenks um eine erste Schwenkachse relativ zueinander verstellbar und die Tragstruktur des Gesäßelements und die Tragstruktur des Wadenelements mittels eines zweiten Gelenks um eine zweite Schwenkachse relativ zueinander verstellbar. Die mit der Erfindung erzielten Vorteile bestehen insbesondere darin, dass aufgrund der gelenkig verbundenen Testelemente diese während eines Tests verschiedene Positionen einnehmen und/oder in solche eingestellt und fixiert werden können.

Das erste Gelenk zwischen der Tragstruktur des Rückenelements und der Tragstruktur des Gesäßelements simuliert insbesondere ein Hüftgelenk einer Person. Beispielsweise ist in Nähe des zweiten Gelenks ein Fixierungspunkt angebracht, um die Testattrappe während eines Prüfzyklus in Position am Sitz zu halten. Dabei ist der Fixierungspunkt beispielsweise über ein Band am Sitz gehalten.

In einer weiteren Weiterbildung ist ein als Nacken- und/oder Kopfelement ausgebildetes Testelement vorgesehen. Das als Nacken- und/oder Kopfelement ausgebildete Testelement ist an das als Rückenelement ausgebildete Testelement montierbar. Beispielsweise sind eine Tragstruktur des Nacken- und/oder Kopfelements und eine Tragstruktur des Rückenelements mittels eines weiteren Gelenks um eine weitere Schwenkachse relativ zueinander verstellbar. Dadurch kann beispielsweise eine Nacken- und/oder Kopfstütze des Sitzes, insbesondere eine Belastbarkeit der Nacken- und/oder Kopfstütze, getestet werden. Die Tragstruktur des Nacken- und/oder Kopfelements ist geformt, um ein entsprechendes Köperteil zu simulieren. Insbesondere weist das Testelement eine Schalenstruktur auf, in welche die entsprechende Tragstruktur mit oder ohne Gewichtseinheiten eingesetzt ist.

In einer möglichen Ausführungsform ist das jeweilige Gelenk als ein Drehgelenk, Drehlager oder Scharnier ausgebildet. Das erste Gelenk zwischen Gesäßelement und Wadenelement ist beispielsweise in einem Winkelbereich von größer 180° verstellbar. Das zweite Gelenk zwischen Rückenelement und Gesäßelement ist beispielsweise in einem Winkelbereich von kleiner 180° verstellbar. Das weitere Gelenk zwischen Rückenelement und Nacken- und/oder Kopfelement ist beispielsweise in einem Winkelbereich von kleiner 180° verstellbar.

In einer weiteren Ausführungsform kann zumindest eine der Tragstrukturen längenverstellbar ausgebildet sein. Beispielsweise ist die Tragstruktur des Wadenelements längenverstellbar ausgebildet. Zur Simulieren eines Fußes der Person sind Rollen oder Gewichtseinheiten an das Wadenelement montierbar.

Beispielsweise ist die jeweilige Tragstruktur als ein Rahmen- und/oder Profilelement ausgebildet. Insbesondere ist die jeweilige Tragstruktur aus Metallstreben oder Metallprofilen gebildet.

In einer beispielhaften Ausführungsform umfasst die jeweilige Tragstruktur zumindest zwei voneinander beabstandete Längsstreben und zumindest eine oder mehrere die beiden Längsstreben quer miteinander verbindende Querstreben. Dabei kann die jeweilige Tragstruktur ausgebildet sein, zumindest eine Gewichtseinheit aufzunehmen und zu halten. Hierzu sind die Längsstreben und/oder die Querstreben mit einem Lochraster versehen. Hierdurch können in einfacher Art und Weise Gewichtseinheiten an der Tragstruktur lösbar befestigt werden.

Gemäß einer weiteren Ausführungsform umfasst die jeweilige Tragstruktur zur Befestigung an der zugehörigen Schalenstruktur zumindest eine Anbindung. Die Anbindung ist beispielsweise zumindest an einer der Längsstreben und/oder zumindest an einer der Querstreben angeordnet. Zum Beispiel ist die Anbindung eine Schraubverbindung und/oder eine Druck- und/oder Steckverbindung. Die jeweilige Schalenstruktur weist beispielsweise mit der Anbindung der Tragstruktur korrespondierende Anbindungspunkte, beispielsweise in Form von korrespondierenden Öffnungen, auf.

Die erfindungsgemäße Vorrichtung zum Testen eines insbesondere verstellbaren Sitzes umfasst die zuvor beispielhaft beschriebene Testattrappe, die auf dem Sitz befestigbar ist.

Der Sitz ist zwischen einer Anzahl von Positionen verstellbar ausgebildet. Insbesondere ist die Testattrappe ausgebildet, eine Belastbarkeit des Sitzes während einer Verstellung zwischen den einzelnen Positionen zu testen.

Zum Beispiel ist der Sitz zwischen einer Start- und Landeposition, auch TTL-Position (TTL= Taxi, Take-off and Landing) genannt, zumindest einer Komfortposition und/oder einer Liege- oder Bettposition verstellbar.

Ausführungsbeispiele der Erfindung werden anhand von Zeichnungen näher erläutert. Dabei zeigen:
Figur 1 schematisch in Explosionsdarstellung eine mögliche Ausführungsform für eine mehrteilige Testattrappe für einen Sitz,
Figur 2 schematisch in perspektivischer Darstellung eine mögliche Ausführungsform für eine mehrteilige Testattrappe im zusammengebauten Zustand,
Figur 3 schematisch in Seitenansicht eine mögliche Ausführungsform für eine mehrteilige Tragstruktur einer Testattrappe,
Figuren 4A bis 4C schematisch eine Vorderansicht und zwei Schnittansichten der Testattrappe im zusammengebauten Zustand,
Figur 5 schematisch in Draufsicht ein Gesäßelement einer Testattrappe,
Figur 6 schematisch in perspektivischer Darstellung eine Vorrichtung zum Testen eines Sitzes mittels einer mehrteiligen und verstellbaren Testattrappe, und
Figuren 7 bis 9 schematisch in Seitenansichten jeweils eine Vorrichtung zum Testen eines verstellbaren Sitzes mittels einer mehrteiligen und verstellbaren Testattrappe.

Einander entsprechende Teile sind in allen Figuren mit den gleichen Bezugszeichen versehen.

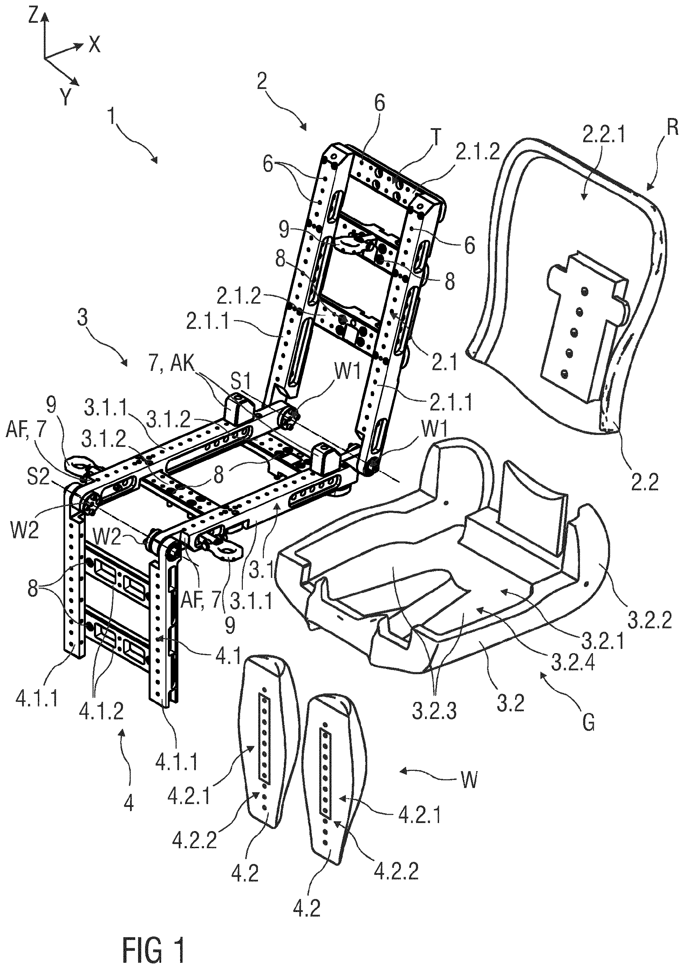

**Figur 1** zeigt schematisch in Explosionsdarstellung eine mögliche Ausführungsform für eine Testattrappe 1. Die Testattrappe 1 bildet einen sitzenden menschlichen Körper nach.

Die Testattrappe 1 ist mehrteilig und/oder verstellbar ausgebildet.

In einer möglichen Ausführungsform umfasst die Testattrappe 1 zumindest drei miteinander gelenkig verbundene Testelemente 2 bis 4. Dabei können einzelne Testelemente 2 bis 4 relativ zu zumindest einem der anderen Testelemente 2 bis 4 verstellbar sein. Auch können mehrere Testelemente 2 und 4 relativ zu einem Testelement 3 verstellbar sein.

Ein erstes Testelement 2 ist als ein Rückenelement R ausgebildet und bildet einen Rücken eines menschlichen Körpers nach. Ein zweites Testelement 3 ist als ein Gesäß-/Oberschenkelelement ausgebildet und bildet ein Gesäß und zwei Oberschenkel eines sitzenden menschlichen Körpers nach. Ein drittes Testelement 4 ist als ein Wadenelement W ausgebildet und bildet zwei Waden eines sitzenden menschlichen Körpers nach.

Das jeweilige Testelement 2 bis 4 umfasst eine Tragstruktur 2.1 bis 4.1 und eine Schalenstruktur 2.2 bis 4.2. Dabei ist jede Schalenstruktur 2.2 bis 4.2 ausgebildet, eine Tragstruktur 2.1 bis 4.1 lösbar aufzunehmen. In einer möglichen Ausführungsform ist die jeweilige Schalenstruktur 2.2 bis 4.2 halboffen ausgebildet.

Dabei kann die jeweilige Tragstruktur 2.1 bis 4.1 in eine Schalenöffnung 2.2.1 bis 4.2.1 der zugehörigen, insbesondere halboffenen Schalenstruktur 2.2 bis 4.2 eingesetzt und gehalten werden. Durch die halboffene Ausgestaltung der Schalenstruktur 2.2 bis 4.2 ist die jeweilige Tragstruktur 2.1 bis 4.1 auch im zusammengesetzten Zustand von außen zugänglich.

Die gelenkig miteinander verbundenen Testelemente 2 bis 4 können während eines Tests verschiedene Positionen einnehmen. Auch kann eines der Testelemente 2 bis 4 oder mehrere dieser zueinander voreingestellt und fixiert sein während eines Tests.

In einer möglichen Ausführungsform sind die Tragstruktur 2.1 des Rückenelements R und die Tragstruktur 3.1 des Gesäßelements G mittels eines ersten Gelenks W1 um eine erste Schwenkachse S1 relativ zueinander verstellbar. Die Tragstruktur 3.1 des Gesäßelements G und die Tragstruktur 4.1 des Wadenelements W sind mittels eines zweiten Gelenks W2 um eine zweite Schwenkachse S2 relativ zueinander verstellbar.

Dabei sind die Tragstrukturen 2.1 und 4.1 im Wesentlichen senkrecht ausgerichtet und die Tragstruktur 3.1 im Wesentlichen waagerecht ausgerichtet. Die das Gesäßelement G bildende und waagerechte Tragstruktur 3.1 ist zwischen den beiden senkrechten Tragstrukturen 2.1 und 4.1 angeordnet. Ein hinteres Ende der Tragstruktur 3.1 ist dabei gelenkig mit einem unteren Ende der Tragstruktur 2.1 verbunden. Ein vorderes Ende der Tragstruktur 3.1 ist gelenkig mit einem oberen Ende der Tragstruktur 4.1 verbunden.

Die jeweilige Tragstruktur 2.1 bis 4.1 ist, wie gezeigt, als eine Rahmenstruktur oder Skelettstruktur ausgebildet. Insbesondere ist die jeweilige Tragstruktur 2.1 bis 4.1 aus Metallelementen, insbesondere Metallstreben oder Metallprofilen gebildet.

Die jeweilige Schalenstruktur 2.2 bis 4.2 ist beispielsweise als ein Formteil, insbesondere ein Kunststoffformteil, zum Beispiel ein Spritzgussformteil, ausgebildet und simuliert ein entsprechendes Körperteil.

Beispielsweise weist die Schalenstruktur 2.2 für das Rückenelement R eine rückenähnliche Form auf und ist einteilig ausgebildet. Die rückenförmige Schalenstruktur 2.2 ist im Wesentlichen flächig ausgebildet und weist eine leicht gebogene Außenkontur auf. Beispielsweise weist die rückenförmige Schalenstruktur 2.2 am oberen Ende eine größere Breite B auf als am unteren Ende.

Die Schalenstruktur 3.2 für das Gesäßelement G weist eine dem Gesäß und den Oberschenkeln eines sitzenden Menschen ähnliche Form auf und ist insbesondere einteilig ausgebildet. Beispielsweise weist die gesäßförmige Schalenstruktur 3.2 im Bereich des Gesäßes im Schnitt eine L-Form auf und im Bereich der Oberschenkel eine flächige V-Form auf. Mit anderen Worten: Die gesäßförmige Schalenstruktur 3.2 ist im Gesäßbereich 3.2.2 großflächig ausgebildet, wobei sich an den Gesäßbereich 3.2.2 eine v-förmige Teilschale 3.2.4 anschließt, die die Oberschenkelbereiche 3.2.3 bildet. Dabei sind die Schalenstruktur 3.2 und die Teilschale 3.2.4 in einer beispielhaften Ausführungsform als ein Schalenformteil ausgebildet. Alternativ können diese aus mehreren Einzelteilen gebildet sein.

Die Schalenstruktur 4.2 des Wadenelements W ist insbesondere zweiteilig ausgebildet. Je Wade ist eine wadenförmige Halbschale 4.2.2 vorgesehen.

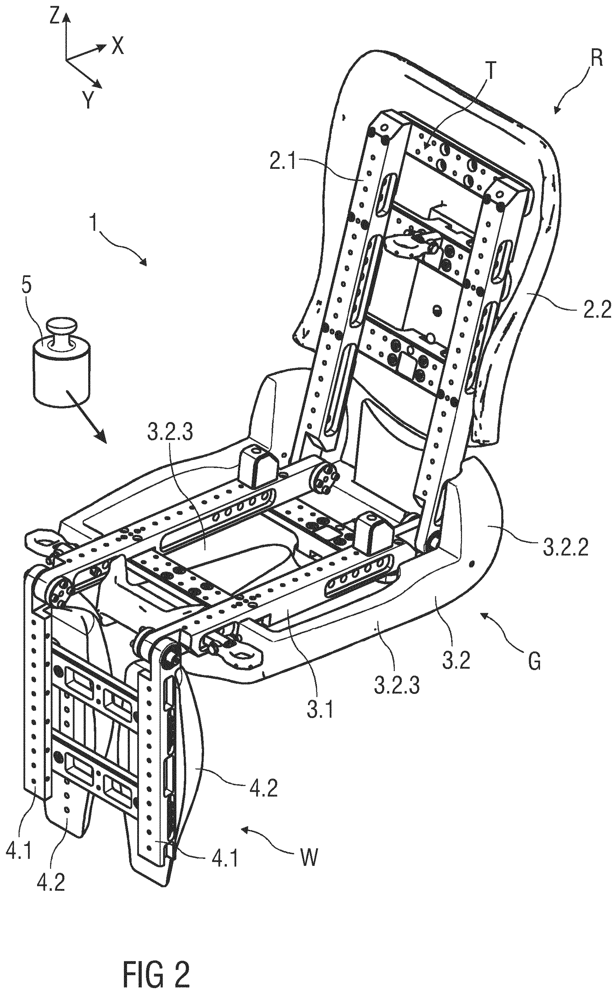

Die Schalenstrukturen 2.2 bis 4.2 sind im zusammengebauten Zustand, wie in **Figur 2** gezeigt, mit den zugehörigen Tragstrukturen 2.1 bis 4.1 fest verbunden.

Die Schalenstrukturen 2.2 bis 4.2 sind separate Elemente. Jede Schalenstruktur 2.2 bis 4.2 ist unabhängig von der oder den anderen Schalenstrukturen 2.2 bis 4.2 ausgebildet. Dabei sind die Schalenstrukturen 2.2 bis 4.2 derart geformt und weisen derartige Abmessungen auf, dass diese im an den Tragstrukturen 2.1 bis 4.2 befestigten Zustand in einem Abstand zueinander angeordnet sind. Hierdurch können die Schalenstrukturen 2.2 bis 4.2 bei Verstellung einer oder mehrerer der gelenkig miteinander verbundenen Tragstrukturen 2.1 bis 4.1 kontaktfrei mitbewegt werden.

Die einzelnen Tragstrukturen 2.1 bis 4.1 sind mittels der Gelenke W1 und W2 gelenkig miteinander verbunden. Insbesondere sind die Tragstrukturen 2.1 bis 4.1 relativ zueinander verdrehbar.

In einer beispielhaften Ausführungsform umfasst die jeweilige Tragstruktur 2.1 bis 4.1 zumindest zwei voneinander beabstandete Längsstreben 2.1.1 bis 4.1.1 und zumindest eine oder mehrere die beiden Längsstreben 2.1.1 bis 4.1.1 quer miteinander verbindende Querstreben 2.1.2 bis 4.1.2.

Die jeweils halboffene Schalenstruktur 2.2 bis 4.2 ermöglicht in einfacher Art und Weise, dass mindestens eines oder mehrere der Tragstrukturen 2.1 bis 4.1 mit zusätzlichen Gewichtseinheiten 5 versehen werden können, um verschiedene Belastungsprofile und/oder -verteilungen zu testen und zu messen. Hierzu sind beispielsweise die Längsstreben 2.1.1 bis 4.1.1 und/oder die Querstreben 2.1.2 bis 4.1.2 jeweils mit einem Lochraster 6 versehen. Hierdurch können in einfacher Art und Weise die Gewichtseinheiten 5 für verschiedene Gewichtsbelastungen an einer oder mehrerer der Tragstrukturen 2.1 bis 4.1 lösbar befestigt werden. Dies ermöglicht die Auswirkungen verschiedener Gewichtsbelastungen mit ein- und derselben Testattrappe 1 zu bestimmen.

Zusätzlich kann die gesäßförmige Tragstruktur 3.1 mit Anschlagselementen 7 versehen sein. Die Anschlagselemente 7 können dabei als Anschlagsfläche AF, insbesondere als eine rampenförmige Anschlagsfläche AF, an einer oder mehrerer der Längsstreben 3.1.1 ausgebildet sein. Im Ausführungsbeispiel ist eine solche integrierte Anschlagsfläche AF für die Begrenzung der Bewegung der wadenförmigen Tragstruktur 4.1 relativ zur gesäßförmigen Tragstruktur 3.1 vorgesehen.

Zur Begrenzung der Bewegung der rückenförmigen Tragstruktur 2.1 relativ zur gesäßförmigen Tragstruktur 3.1 ist ein Anschlagskörper AK als Anschlagselement 7 auf den Längsstreben 3.1.1 an deren hinteren Enden angeordnet. Der Anschlagskörper AK weist dabei in Richtung der rückenförmigen Tragstruktur 2.1 eine Rampenform auf.

Zur Befestigung der Schalenstruktur 2.2 bis 4.2 an der jeweils zugehörigen Tragstruktur 2.1 bis 4.1 umfasst beispielsweise zumindest eine der Querstreben 2.1.2 bis 4.1.2 eine zugehörige Anbindung 8. Die Schalenstrukturen 2.2 bis 4.2 sind mit den Tragstrukturen 2.1 bis 4.1 form- oder kraftschlüssig und insbesondere lösbar verbunden. Beispielsweise sind diese miteinander verschraubt oder verklipst.

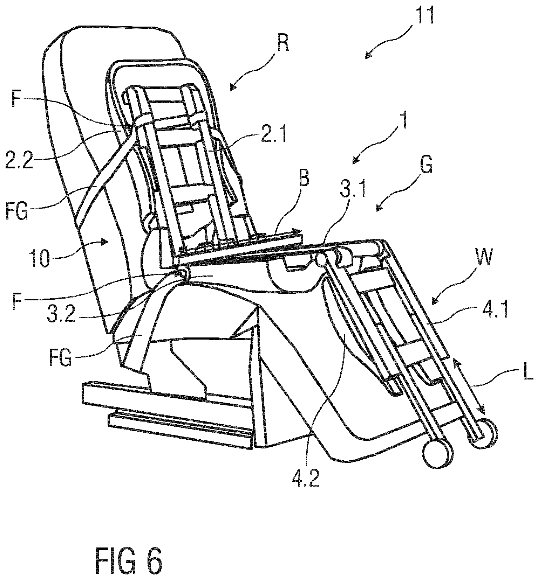

Zusätzlich kann die Testattrappe 1 mit Transportelementen 9, beispielsweise Transporthaken, versehen sein. Mittels der Transportelemente 9 kann die Testattrappe 1 durch eine Krananlage oder ähnliches einfach und sicher auf einen zu testenden Sitz 10 (dargestellt in **Figur 6****)** positioniert und ausgerichtet oder umgesetzt werden.

**Figur 2** zeigt die Testattrappe 1 im zusammengebauten Zustand.

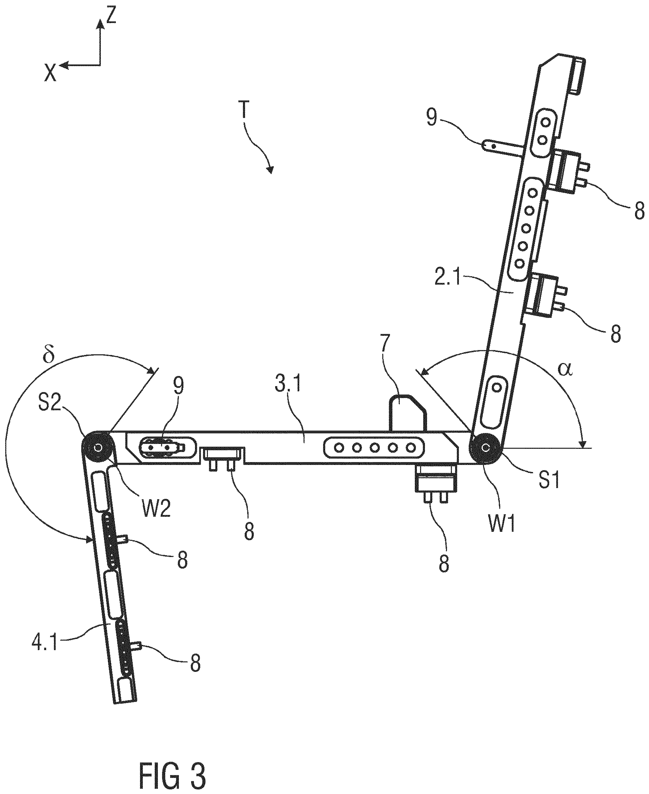

**Figur 3** zeigt schematisch in Seitenansicht einen mehrteiligen Träger T der Testattrappe 1. Die einzelnen Tragstrukturen 2.1 bis 4.1 des Trägers T sind gelenkig mittels der Gelenke W1 und W2 verbunden.

Dabei ist die rückenförmige Tragstruktur 2.1 relativ zur gesäßförmigen Tragstruktur 3.1 in einem Winkel α mit einem Winkelbereich von kleiner 180°, insbesondere in einem Winkelbereich von 0° bis 135° verstellbar, insbesondere schwenkbar.

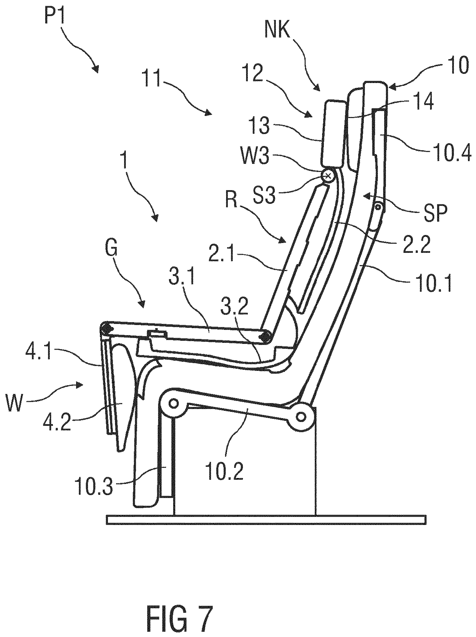

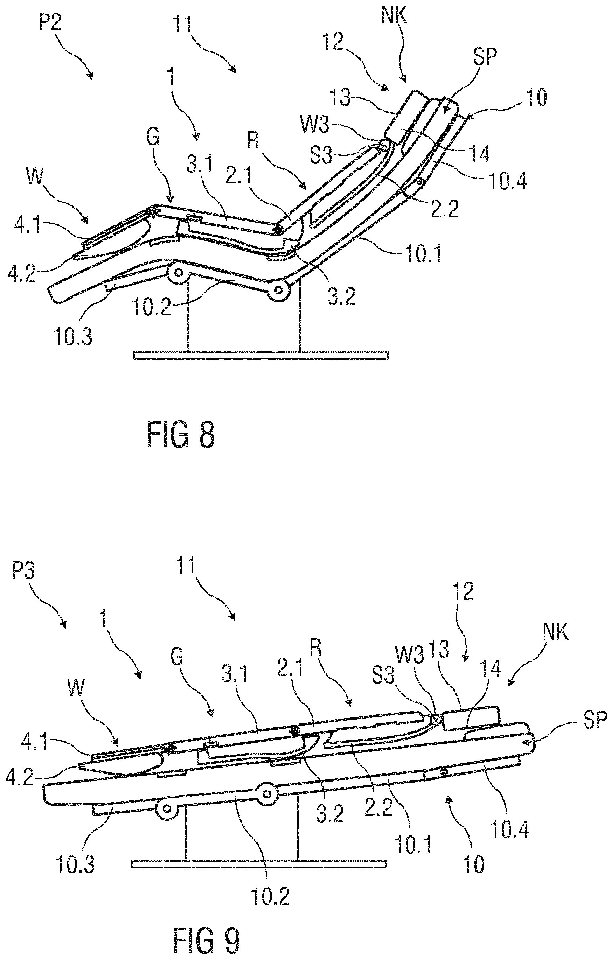

Dabei nimmt die rückenförmige Tragstruktur 2.1 in der 0°-Position eine im Wesentlichen waagerechte, wie in **Figur 9** gezeigte, Position P3 ein und liegt im Wesentlichen in einer Ebene mit der waagerechten gesäßförmigen Tragstruktur 3.1. Diese Position P3 wird auch Bettposition oder Liegeposition der Tragstrukturen 2.1 und 3.1 und des Sitzes 10 genannt. In einer in **Figur 8** gezeigten Position P2 zwischen 1° und 89° ist die rückenförmige Tragstruktur 2.1 geneigt zur gesäßförmigen Tragstruktur 3.1 für eine Liege- oder Sitzkomfortposition des Sitzes 10. In der 90°-Position und somit einer vertikalen, in **Figur 6** **und** **7** gezeigten Position P1 der rückenförmigen Tragstruktur 2.1 zur gesäßförmigen Tragstruktur 3.1 ist diese in der sogenannten TTL-Position P1 (taxi-take-off-and-landing position) des Sitzes 10 stellbar oder gestellt.

Die Anbindungen 8 zur Befestigung der Schalenstrukturen 2.2 bis 4.2 an den Tragstrukturen 2.1 bis 4.1 sind als Steckelemente ausgebildet.

Dabei sind die Anbindungen 8 auf der zu den Schalenstrukturen 2.2 bis 4.2 gerichteten Oberflächenseite der Tragstrukturen 2.1 bis 4.1 angeordnet.

Die Transportelemente 9 und/oder die Anschlagselemente 7 sind auf der zur Schalenstruktur 2.2 bis 4.2 gegenüberliegenden Oberflächenseite der Tragstrukturen 2.1 bis 4.1 angeordnet.

Darüber hinaus ist die wadenförmige Tragstruktur 4.1 relativ zur gesäßförmigen Tragstruktur 3.1 in einem Winkel δ mit einem Winkelbereich von größer 180°, insbesondere in einem Winkelbereich von -10° zur Vertikalen bis 200° verstellbar, insbesondere schwenkbar.

Dabei nimmt die wadenförmige Tragstruktur 4.1 in der -10°-Position eine im Wesentlichen nach innen geneigte Position relativ zu deren vertikalen Position und zur waagerechten gesäßförmigen Tragstruktur 3.1 ein. Diese Position wird auch TTL-Position P1 (taxi-take-off-and-landing position) genannt. In einer Position zwischen +10° und 90° ist die wadenförmige Tragstruktur 4.1 geneigt zur gesäßförmigen Tragstruktur 3.1 oder in einer Ebene mit dieser für eine Liege- oder Sitzkomfortposition P2.

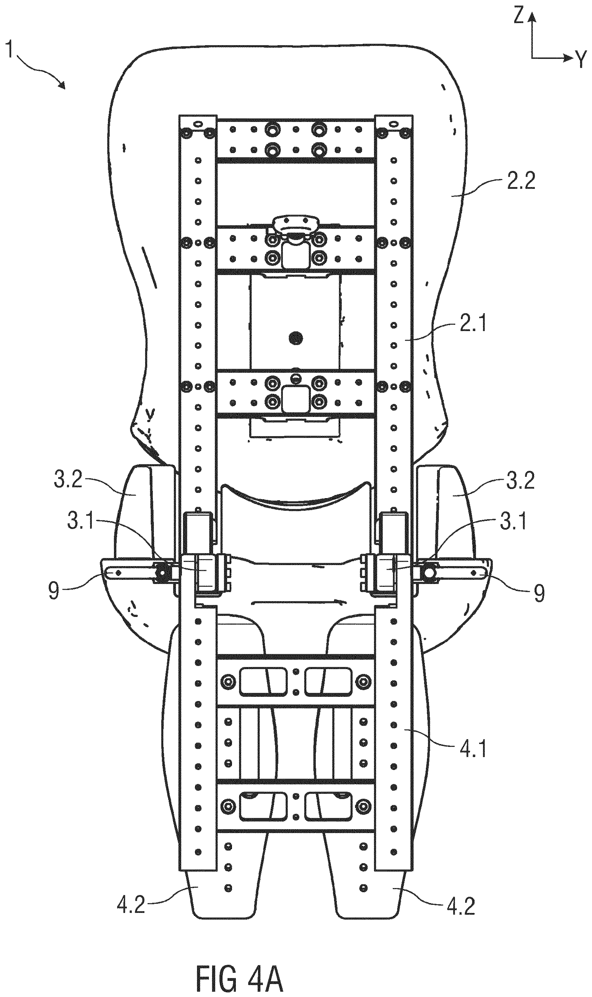

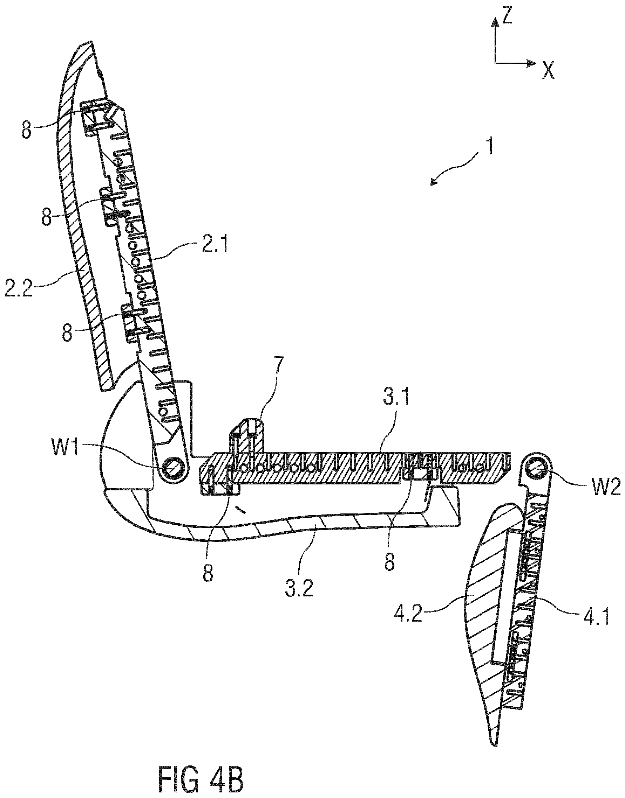

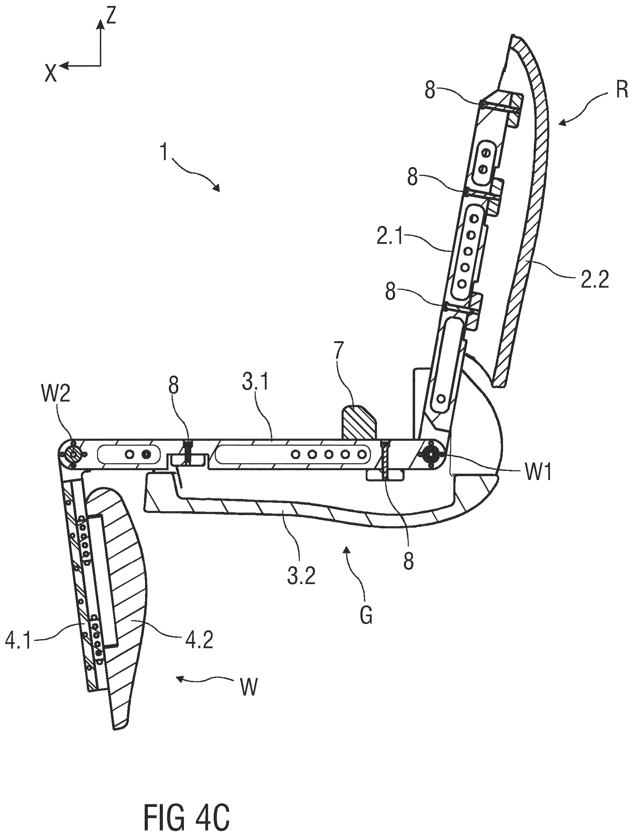

**Figuren 4A bis 4C** zeigen verschiedene Ansichten der Testattrappe 1 im zusammengebauten Zustand von Tragstrukturen 2.1 bis 4.1 und Schalenstrukturen 2.2 bis 4.2 mittels der Anbindungen 8.

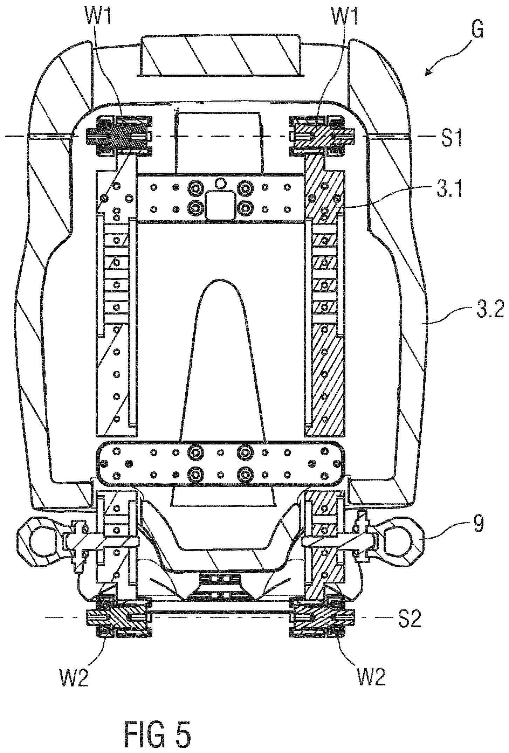

**Figur 5** zeigt schematisch einen Schnitt durch die Testattrappe 1 im zusammengebauten Zustand im Bereich der Gelenke W1 und W2.

Das jeweilige Gelenk W1, W2 ist beispielsweise als ein Drehgelenk, Drehlager oder Scharnier ausgebildet.

**Figur 6** zeigt eine Vorrichtung 11 zum Testen eines, insbesondere verstellbaren, Sitzes 10 mittels einer an dem Sitz 10 befestigbaren Testattrappe 1. Die Vorrichtung 11 umfasst einen verstellbaren Sitz 10 mit einer an dem Sitz 10 befestigten Testattrappe 1, wobei die Testattrappe 1 in Abhängigkeit einer Verstellung des Sitzes 10 verstellbar ausgebildet und auf dem Sitz 10 positioniert ist.

Die Tragstrukturen 2.1 bis 4.1 sind beispielsweise als Doppelstreben ausgebildet oder weisen längliche Ausnehmungen auf, durch welche beispielsweise Gurte FG zur Befestigung der Testattrappe 1 am Sitz 10 geführt sind. Alternativ oder zusätzlich können die Gurte FG, insbesondere Befestigungsgurte oder Befestigungsbänder, durch Ösen der Transportelemente 9 geführt sein. Das erste Gelenk W1 zwischen der Tragstruktur 2.1 des Rückenelements R und der Tragstruktur 3.1 des Gesäßelements G simuliert insbesondere ein Hüftgelenk einer Person. Beispielsweise ist in Nähe des zweiten Gelenks W2 ein Fixierungspunkt F angebracht, um die Testattrappe 1 während eines Prüfzyklus in Position am Sitz 10 zu halten. Dabei ist der Fixierungspunkt F beispielsweise über ein Gurt FG am Sitz 10 gehalten. Insbesondere ist der Fixierungspunkt F an der Schalenstruktur 3.2 angeordnet.

In einer Weiterbildung ist ein weiterer Fixierungspunkt F am Rückenelement R gebildet.

In einer weiteren Ausführungsform kann zumindest eine der Tragstrukturen 2.1 bis 4.1 derart konfiguriert sein, dass diese in Länge L und/oder Breite B verstellbar ist. Beispielsweise ist die Tragstruktur 4.1 des Wadenelements W in der Länge L verstellbar. Beispielsweise umfasst die Tragstruktur 4.1 mehrere Profil- oder Stangenelemente, die ineinander verschiebbar, insbesondere teleskopisch ineinander verschiebbar sind. Hierdurch können mittels einer solch variabel einstellbaren Testattrappe 1 mit ein- und derselben Attrappe verschiedene Körperabmessungen, wie Körperlängen und/oder -breiten, berücksichtigt und deren Auswirkungen beim Verstellen am Sitz 10 getestet werden.

**Figuren 7 bis 9** zeigen schematisch in Seitenansichten jeweils eine Vorrichtung 11 zum Testen eines verstellbaren Sitzes 10 mittels einer mehrteiligen und verstellbaren Testattrappe 1. Der Sitz 10 umfasst eine Anzahl von relativ zueinander verstellbaren Sitzteilen 10.1 bis 10.3 und zumindest ein Sitzpolster SP. Das Sitzteil 10.1 ist beispielsweise eine Rückenlehne, das Sitzteil 10.2 eine Sitzschale und Sitzteil 10.3 eine Beinstütze. Optional zusätzlich umfasst der Sitz 10 ein als verstellbare Nacken- und/oder Kopfstütze ausgebildetes Sitzteil 10.4.

**Figur 7** zeigt den Sitz 10 in einer Start- und Landeposition, insbesondere in der sogenannten TTL-Position P1.

**Figur 8** zeigt den Sitz 10 in einer gegenüber der TTL-Position P1 verstellten Position P2, insbesondere in einer Liege- oder Sitzkomfortposition.

**Figur 9** zeigt den Sitz 10 in einer im Wesentlichen horizontalen Position P3, insbesondere in einer Bettposition.

Die Testattrappe 1 weist in der jeweiligen Position P1 bis P3 relativ zueinander verstellte Testelemente 2 bis 4 sowie relativ zueinander verstellte Tragstrukturen 2.1 bis 4.1 auf.

Zusätzlich optional ist ein als Nacken- und/oder Kopfelement NK ausgebildetes Testelement 12 vorgesehen. Das als Nacken- und/oder Kopfelement NK ausgebildete Testelement 12 ist an das als Rückenelement R ausgebildete erstes Testelement 2 montierbar. Beispielsweise sind eine Tragstruktur 13 des Nacken- und/oder Kopfelements NK und eine Tragstruktur 2.1 des Rückenelements R mittels eines weiteren Gelenks W3 um eine weitere Schwenkachse S3 relativ zueinander verstellbar. Dadurch kann beispielsweise eine Nacken- und/oder Kopfstütze des Sitzes 10, insbesondere eine Belastbarkeit der Nacken- und/oder Kopfstütze, getestet werden. Die Tragstruktur 13 des Nacken- und/oder Kopfelements NK ist geformt, um ein entsprechendes Köperteil zu simulieren. Insbesondere weist das Testelement 12 ebenfalls eine Schalenstruktur 14 auf, in welche die entsprechende Tragstruktur 13 mit oder ohne Gewichtseinheiten 5 eingesetzt ist.

Zum Beispiel wird/werden der Sitz 10, insbesondere die Sitzteile 10.1 bis 10.4 sowie beispielsweise nicht näher dargestellte Schwenkverbindungen zwischen den Sitzteilen 10.1 bis 10.4 und/oder auf eine nicht näher dargestellte Längsverstelleinheit, wie beispielsweise ein Schienenpaar, auf Belastbarkeit und Lastverteilung geprüft. Beispielsweise wird der Sitz 10 in einem Dauertest über mehrere Prüfzyklen zwischen den Positionen P1 bis P3 verstellt. Krafteinwirkungen erfolgen über die Testattrappe 1, die durch ihre Testelemente 2 bis 4 und 12 unterschiedliche auf den Sitz 10 einwirkende Belastungspunkte aufweist.

### Bezugszeichenliste

1 Testattrappe
2 erstes Testelement
2.1 Tragstruktur
2.1.1 Längsstrebe
2.1.2 Querstrebe
2.2 Schalenstruktur
2.2.1 Schalenöffnung
3 zweites Testelement
3.1 Tragstruktur
3.1.1 Längsstrebe
3.1.2 Querstrebe
3.2 Schalenstruktur
3.2.1 Schalenöffnung
3.2.2 Gesäßbereich
3.2.3 Oberschenkelbereich
3.2.4 Teilschale
4 drittes Testelement
4.1 Tragstruktur
4.1.1 Längsstrebe
4.1.2 Querstrebe
4.2 Schalenstruktur
4.2.1 Schalenöffnung
4.2.2 Halbschale
5 Gewichtseinheit
6 Lochraster
7 Anschlagselement
8 Anbindung
9 Transportelement
10 Sitz
10.1 bis 10.4 Sitzteil
11 Vorrichtung
12 Testelement
13 Tragstruktur
14 Schalenstruktur
AF Anschlagsfläche
AK Anschlagskörper
B Breite
F Fixierungspunkt
FG Gurt
G Gesäßelement
L Länge
NK Nacken- und/oder Kopfelement
P1 TTL-Position
P2 Position, insbesondere Liege- oder Sitzkomfortposition
P3 Position, insbesondere Bettposition
R Rückenelement
SP Sitzpolster
S1 erste Schwenkachse
S2 zweite Schwenkachse
S3 weitere Schwenkachse
T Träger
W Wadenelement
W1 erstes Gelenk
W2 zweites Gelenk
W3 weiteres Gelenk
α Winkel
δ Winkel

## Patentansprüche

1. Testattrappe (1) für einen, insbesondere verstellbaren, Sitz (10), umfassend zumindest drei miteinander gelenkig verbundene Testelemente (2 bis 4), wobei ein erstes Testelement (2) als Rückenelement (R), ein zweites Testelement (3) als Gesäßelement (G) und ein drittes Testelement (4) als Wadenelement (W) ausgebildet sind und wobei das jeweilige Testelement (2 bis 4) eine separate Schalenstruktur (2.2 bis 4.2) und eine Tragstruktur (2.1 bis 4.1) aufweist, wobei jede Schalenstruktur (2.2 bis 4.2) ausgebildet ist, eine Tragstruktur (2.1 bis 4.1) lösbar aufzunehmen, wobei zumindest die Tragstruktur (2.1) des Rückenelements (R) und die Tragstruktur (3.1) des Gesäßelements (G) mittels eines Gelenks (W1) miteinander verbunden und um eine Schwenkachse (S1) zwischen zumindest einer TTL-Position (P1) und einer im Wesentlichen horizontalen Position (P3) relativ zueinander verstellbar sind, und wobei die Schalenstrukturen (2.2 bis 4.2) derart geformt sind und derartige Abmessungen aufweisen, dass diese in einem an den Tragstrukturen (2.1 bis 4.2) befestigten Zustand in einem Abstand zueinander angeordnet sind.

2. Testattrappe (1) nach Anspruch 1, wobei die jeweilige Schalenstruktur (2.2 bis 4.2) eine Schalenöffnung (2.2.1 bis 4.2.1) umfasst, in welcher die jeweilige Tragstruktur (2.1 bis 4.1) von außen zugänglich eingesetzt und gehalten ist.

3. Testattrappe (1) nach Anspruch 1 oder 2, wobei die jeweilige Schalenstruktur (2.2 bis 4.2) halbschalenförmig ausgebildet ist.

4. Testattrappe (1) nach einem der vorhergehenden Ansprüche, wobei die jeweilige Schalenstruktur (2.2 bis 4.2) geformt ist, um ein entsprechendes Körperteil zu simulieren.

5. Testattrappe (1) nach einem der vorhergehenden Ansprüche, wobei die jeweilige Tragstruktur (2.1 bis 4.1) ausgebildet ist, zumindest eine Gewichtseinheit (5) aufzunehmen und zu halten.

6. Testattrappe (1) nach einem der vorhergehenden Ansprüche, wobei die Tragstruktur (3.1) des Gesäßelements (G) und die Tragstruktur (4.1) des Wadenelements (W) mittels eines zweiten Gelenks (W2) um eine zweite Schwenkachse (S2) relativ zueinander verstellbar sind.

7. Testattrappe (1) nach Anspruch 6 wobei das jeweilige Gelenk (W1, W2) als ein Drehgelenk, Drehlager oder Scharnier ausgebildet ist.

8. Testattrappe (1) nach einem der vorhergehenden Ansprüche, wobei zumindest die Tragstruktur (4.1) des Wadenelements (W) längenverstellbar ausgebildet ist.

9. Testattrappe (1) nach einem der vorhergehenden Ansprüche, wobei die jeweilige Tragstruktur (2.1 bis 4.1) zumindest zwei voneinander beabstandete Längsstreben (2.1.1 bis 4.1.1) und zumindest eine oder mehrere die beiden Längsstreben (2.1.1 bis 4.1.1) quer miteinander verbindende Querstreben (2.1.2 bis 4.1.2) umfasst.

10. Testattrappe (1) nach Anspruch 9, wobei die Längsstreben (2.1.1 bis 4.1.1) und/oder die Querstreben (2.1.2 bis 4.1.2) mit einem Lochraster (6) versehen sind.

11. Testattrappe (1) nach einem der vorhergehenden Ansprüche, wobei die jeweilige Tragstruktur (2.1 bis 4.1) zur Befestigung an der Schalenstruktur (2.2 bis 4.2) zumindest eine Anbindung (8) umfasst.

12. Testattrappe (1) nach einem der Ansprüche 9 bis 11, wobei die Anbindung (8) zumindest an einer der Längsstreben (2.1.1 bis 4.1.1) und/oder zumindest an einer der Querstreben (2.1.2 bis 4.1.2) ausgebildet ist.

13. Testattrappe (1) nach einem der Ansprüche 9 bis 12, wobei die Tragstruktur (3.1) des Gesäßelements (G) mit rampenförmigen Anschlagselementen (7) versehen ist.

14. Vorrichtung (11) zum Testen eines, insbesondere verstellbaren Sitzes (10) mittels einer Testattrappe (1) nach einem der vorhergehenden Ansprüche, wobei die Testattrappe (1) auf dem Sitz (10) lösbar befestigt ist.

15. Vorrichtung (11) nach Anspruch 14, wobei der Sitz (10) zwischen einer Anzahl von Positionen (P1 bis P3) verstellbar ausgebildet ist.

## Claims

1. Test dummy (1) for a seat (10), in particular an adjustable seat, comprising at least three test elements (2 to 4) connected to one another in an articulated manner, wherein a first test element (2) is designed as a back element (R), a second test element (3) as a seat element (G) and a third test element (4) as a calf element (W), and wherein the relevant test element (2 to 4) has a separate shell structure (2.2 to 4.2) and a support structure (2.1 to 4.1), wherein each shell structure (2.2 to 4.2) is designed to detachably accommodate a support structure (2.1 to 4.1), wherein at least the support structure (2.1) of the back element (R) and the support structure (3.1) of the seat element (G) are connected to one another by means of a joint (W1) and can be adjusted relative to one another about a pivot axis (S1) between at least one TTL position (P1) and a substantially horizontal position (P3), and wherein the shell structures (2.2 to 4.2) are shaped and have dimensions such that they are arranged at a distance from one another when fastened to the support structures (2.1 to 4.2).

2. Test dummy (1) according to claim 1, wherein the relevant shell structure (2.2 to 4.2) comprises a shell opening (2.2.1 to 4.2.1) in which the relevant support structure (2.1 to 4.1) is inserted and held so as to be accessible from the outside.

3. Test dummy (1) according to either claim 1 or claim 2, wherein the relevant shell structure (2.2 to 4.2) is formed as a half shell.

4. Test dummy (1) according to any of the preceding claims, wherein the relevant shell structure (2.2 to 4.2) is shaped to simulate a corresponding body part.

5. Test dummy (1) according to any of the preceding claims, wherein the relevant support structure (2.1 to 4.1) is designed to accommodate and hold at least one weight unit (5).

6. Test dummy (1) according to any of the preceding claims, wherein the support structure (3.1) of the seat element (G) and the support structure (4.1) of the calf element (W) are adjustable relative to one another about a second pivot axis (S2) by means of a second joint (W2).

7. Test dummy (1) according to claim 6, wherein the relevant joint (W1, W2) is designed as a rotary joint, rotary bearing or hinge.

8. Test dummy (1) according to any of the preceding claims, wherein at least the support structure (4.1) of the calf element (W) is designed to be adjustable in length.

9. Test dummy (1) according to any of the preceding claims, wherein the relevant support structure (2.1 to 4.1) comprises at least two longitudinal struts (2.1.1 to 4.1.1) spaced apart from one another and at least one or more transverse struts (2.1.2 to 4.1.2) transversely connecting the two longitudinal struts (2.1.1 to 4.1.1) to one another.

10. Test dummy (1) according to claim 9, wherein the longitudinal struts (2.1.1 to 4.1.1) and/or the transverse struts (2.1.2 to 4.1.2) are provided with a hole pattern (6).

11. Test dummy (1) according to any of the preceding claims, wherein the relevant support structure (2.1 to 4.1) comprises at least one connection (8) for fastening to the shell structure (2.2 to 4.2).

12. Test dummy (1) according to any of claims 9 to 11, wherein the connection (8) is formed at least on one of the longitudinal struts (2.1.1 to 4.1.1) and/or at least on one of the transverse struts (2.1.2 to 4.1.2).

13. Test dummy (1) according to any of claims 9 to 12, wherein the support structure (3.1) of the seat element (G) is provided with ramp-shaped stop elements (7).

14. Device (11) for testing a seat (10), in particular an adjustable seat, by means of a test dummy (1) according to any of the preceding claims, wherein the test dummy (1) is detachably fastened to the seat (10).

15. Device (11) according to claim 14, wherein the seat (10) is adjustable between a number of positions (P1 to P3).

## Revendications

1. Mannequin de test (1) pour un siège (10), en particulier réglable, comprenant au moins trois éléments de test (2 à 4) reliés entre eux de manière articulée, un premier élément de test (2) étant conçu comme un élément dossier (R), un deuxième élément de test (3) comme un élément fessier (G) et un troisième élément de test (4) comme un élément mollet (W) et l'élément de test (2 à 4) respectif présentant une structure de coque (2.2 à 4.2) séparée et une structure support (2.1 à 4.1), chaque structure de coque (2.2 à 4.2) étant conçue pour recevoir de manière amovible une structure support (2.1 à 4.1), au moins la structure support (2.1) de l'élément dossier (R) et la structure support (3.1) de l'élément fessier (G) étant reliées l'une à l'autre au moyen d'une articulation (W1) et étant réglables l'une par rapport à l'autre autour d'un axe de pivotement (S1) entre au moins une position TTL (taxi, takeoff and landing - taxi, décollage et atterrissage) (P1) et une position sensiblement horizontale (P3) et les structures de coque (2.2 à 4.2) étant formées et présentant des dimensions de manière telle que, dans un état fixé aux structures supports (2.1 à 4.2), elles sont agencées à distance les unes des autres.

2. Mannequin de test (1) selon la revendication 1, la structure de coque (2.2 à 4.2) respective comprenant une ouverture de coque (2.2.1 à 4.2.1) dans laquelle la structure support (2.1 à 4.1) respective est introduite et maintenue de manière accessible de l'extérieur.

3. Mannequin de test (1) selon la revendication 1 ou 2, la structure de coque (2.2 à 4.2) respective étant réalisée en forme de demi-coque.

4. Mannequin de test (1) selon l'une des revendications précédentes, la structure de coque (2.2 à 4.2) respective étant moulée pour simuler une partie corporelle correspondante.

5. Mannequin de test (1) selon l'une des revendications précédentes, la structure support (2.1 à 4.1) respective étant conçue pour recevoir et maintenir au moins une unité de poids (5).

6. Mannequin de test (1) selon l'une des revendications précédentes, la structure support (3.1) de l'élément fessier (G) et la structure support (4.1) de l'élément mollet (W) étant réglables l'une par rapport à l'autre au moyen d'une deuxième articulation (W2) autour d'un deuxième axe de pivotement (S2).

7. Mannequin de test (1) selon la revendication 6, l'articulation (W1, W2) respective étant conçue comme une articulation rotative, un palier rotatif ou une charnière.

8. Mannequin de test (1) selon l'une des revendications précédentes, au moins la structure support (4.1) de l'élément mollet (W) étant conçue de manière réglable en longueur.

9. Mannequin de test (1) selon l'une des revendications précédentes, la structure support (2.1 à 4.1) respective comprenant au moins deux montants longitudinaux (2.1.1 à 4.1.1) écartés l'un de l'autre et au moins un ou plusieurs montants transversaux (2.1.2 à 4.1.2) reliant transversalement entre eux les deux montants longitudinaux (2.1.1 à 4.1.1).

10. Mannequin de test (1) selon la revendication 9, les montants longitudinaux (2.1.1 à 4.1.1) et/ou les montants transversaux (2.1.2 à 4.1.2) étant pourvus d'une trame de perforations (6).

11. Mannequin de test (1) selon l'une des revendications précédentes, la structure support (2.1 à 4.1) respective comprenant au moins une liaison (8) pour la fixation à la structure de coque (2.2 à 4.2).

12. Mannequin de test (1) selon l'une des revendications 9 à 11, la liaison (8) étant réalisée au moins sur l'un des montants longitudinaux (2.1.1 à 4.1.1) et/ou au moins sur l'un des montants transversaux (2.1.2 à 4.1.2).

13. Mannequin de test (1) selon l'une des revendications 9 à 12, la structure support (3.1) de l'élément fessier (G) étant pourvue d'éléments de butée (7) en forme de rampe.

14. Dispositif (11) destiné à tester un siège (10), en particulier réglable, au moyen d'un mannequin de test (1) selon l'une des revendications précédentes, le mannequin de test (1) étant fixé de manière amovible sur le siège (10).

15. Dispositif (11) selon la revendication 14, le siège (10) étant conçu pour être réglable entre un certain nombre de positions (P1 à P3).
